# EUROPEAN PATENT APPLICATION

(11) **EP 1 236 704 A1**
(43) Date of publication of application: **04.09.2002**
(21) Application number: 02250733.9
(22) Date of filing: 02.02.2002
(51) Int. Cl.: C04B 35/14, C04B 35/80, H05B 3/48, H05B 3/74, H05B 3/14

(54) **Base for an electric heater and method of manufacture**

(30) Priority: 19.02.2001 GB 0103929
(71) Applicant: Microtherm International Limited, Upton, Wirral CH49 1SX (GB)
(72) Inventor: Jackson, James David Joseph, Kidderminster, Worcestershire DY10 2TR (GB); Mitchell, Matthew Benedict David, Radwell, Hope Valley S33 9JQ (GB)
(74) Representative: Jackson, Derek Charles

(57) **Abstract**

A base (2) for an electric heater comprises a compressed and heat-hardened composition. The composition comprises:
65 to 98 weight percent fumed silica;
1 to 15 weight percent reinforcing filaments;
up to 10 weight percent pyrogenic silica; and
up to 20 weight percent opacifier.

A method of manufacturing the base is also disclosed.

## Description

The present invention relates to a base for an electric heater and a method of manufacture thereof. The invention is particularly, but not exclusively, concerned with a base for an electric heater for use in a cooking appliance, such as in a cooking hob with a glass-ceramic cooking surface, or in an oven.

Electric heaters for cooking appliances are well-known having a base comprising a metal dish-like support containing a layer of thermal insulation material, such as microporous thermal insulation material. An electric heating element is supported on the layer of insulation material. A wall of thermal insulation material is also usually provided around the periphery of the heater inside the metal dish-like support.

In order to reduce costs, it would be desirable to replace the metal dish-like support, the layer of thermal insulation material and the wall of thermal insulation material by a single component comprising a dish-like base of thermal insulation material in which the heating element is directly supported. There are two main requirements for such an arrangement. The dish-like base of thermal insulation material must have adequate flexural strength so as to be self-supporting and also low thermal conductivity so as to prevent the outside of the base reaching an unacceptably high temperature during operation of a resulting heater.

Attempts have been made to solve the problem by providing a base comprising vermiculite and a binder, or comprising mixtures of vermiculite or mica, pyrogenic silica and optionally reinforcing fibres, a binder and an opacifier. Such compositions can provide bases with excellent flexural strength. However, their thermal conductivity is higher than is desirable and it has been found necessary to provide a layer of more efficient compacted microporous thermal insulation material inside the bases and supporting the heating element.

It is an object of the present invention to overcome or minimise this problem.

According to one aspect of the present invention there is provided a base for an electric heater comprising a compressed and heat-hardened composition, wherein the composition comprises:
65 to 98 weight percent fumed silica;
1 to 15 weight percent reinforcing filaments;
up to 10 weight percent pyrogenic silica; and
up to 20 weight percent opacifier.

According to a further aspect of the present invention there is provided a method of manufacturing a base for an electric heater comprising the steps of:
1) providing a composition comprising:
   65 to 98 weight percent fumed silica;
   1 to 15 weight percent reinforcing filaments;
   up to 10 weight percent pyrogenic silica;
   Up to 20 weight percent opacifier;
2) compressing the composition to form the base; and
3) heating the base to effect hardening thereof.

Heat hardening may be at a temperature of from 500 to 900 degrees Celsius.

Heat hardening may be for a period of between 15 and 25 minutes.

The reinforcing filaments may be selected from glass, such as E glass, R glass or S glass, or modifications thereof, silica, ceramic fibres, mineral fibres and body soluble fibres.

The opacifier, when provided, may be selected from infrared scattering materials such as titanium dioxide, which may be in the form of rutile, zircon, silicon carbide and iron oxide, which may be in the form of haematite.

The base may be provided of dish-like form, having an upstanding wall.

The base may additionally be provided with at least one electric heating element secured thereto, whereby an electric heater is formed. A terminal block may be secured to the base and electrically connected to the at least one electric heating element.

The at least one electric heating element and/or the terminal block may be secured to the base during formation of the base by compression of the composition.

A layer of microporous thermal insulation material of lower thermal conductivity than the base may be provided between the base and the at least one electric heating element.

As a result of the present invention, a base for an electric heater is provided which has adequate flexural strength and low thermal conductivity. It is not essential to provide additional thermal insulation of lower thermal conductivity than the base, although such can be included if desired.

For a better understanding of the invention and to show more clearly how it may be carried into effect, the following examples are given, with reference to the accompanying drawings in which:
Figure 1 is a plan view of an embodiment of a base for an electric heater according to the present invention;
Figure 2 is a cross-sectional view of the base of Figure 1;
Figure 3 is a plan view of an electric heater provided with the base of Figure 1;
Figure 4 is a cross-sectional view of the heater of Figure 3; and
Figure 5 is a cross-sectional view of a modified heater having additional thermal insulation material provided between the base and the heating element.

### Example 1

A composition was prepared comprising:
98 percent by weight fumed silica, supplied by VAW of Germany; and
2 percent by weight Advantex glass filaments, supplied by OCF of the USA.

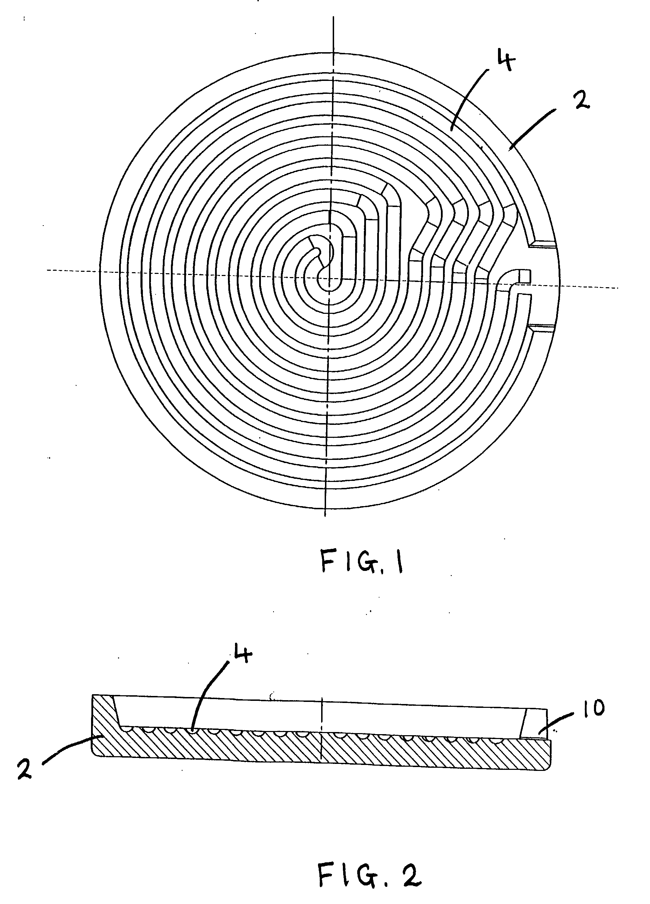

The composition was compressed in a forming press to form a base for a heater as denoted by reference numeral 2 in Figures 1 and 2. The base 2 had a block density of 700 kilograms per cubic metre.

The base 2 was heated at 800 degrees Celsius for 20 minutes to effect hardening thereof.

Thermal conductivity was measured for the base 2 and had a value of 0.105 Watts per metre Kelvin.

Flexural strength was measured for the base 2 and had a value of 1400 kilonewtons per square metre.

During the process of compressing the composition to form the base 2 for the heater, grooves 4 were also formed in a surface of the base.

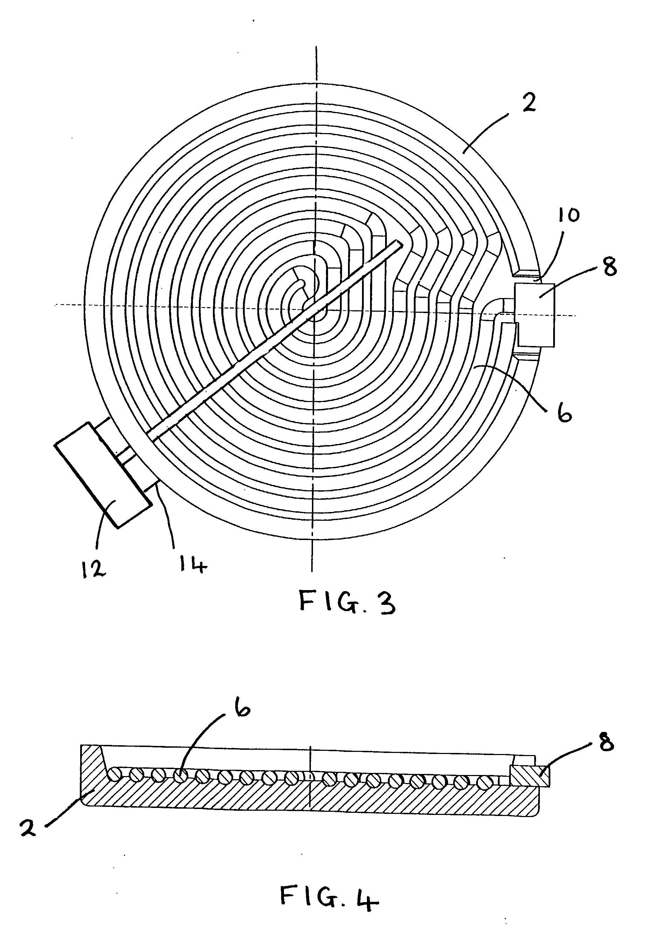

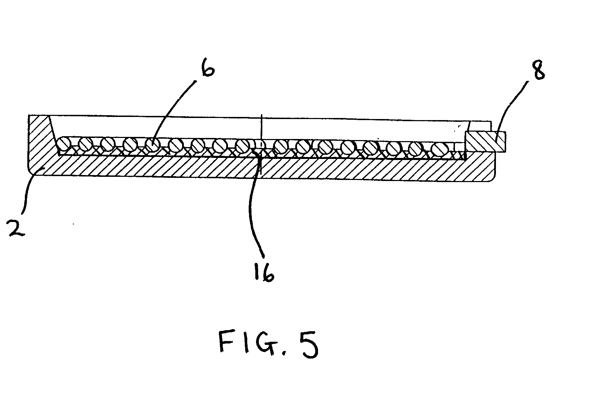

After the heat-hardening treatment of the base 2, a heating element 6 of well-known form was secured in the grooves 4, as shown in Figures 3 and 4, and connected to a terminal block 8, to form an electric heater. Such heater is particular applicable for use in cooking appliances. The heating element 6 and the terminal block 8 were suitably secured in place by means of a high-temperature-withstanding adhesive. The terminal block 8 was suitably secured in a recess 10 provided in the base 2 during formation of the base 2.

A temperature limiter 12 of well-known form can be provided, traversing the heater and overlying the heating element 6. Such temperature limiter 12 can have a mounting bracket 14 which is secured to the outside of the base 2 by means of a suitable adhesive composition.

Although the base 2 has adequately low thermal conductivity for most applications, if desired a layer of compacted microporous thermal insulation material of lower thermal conductivity may be provided between the base 2 and the heating element 6. Such an arrangement is illustrated in Figure 5, in which a layer 16 of the compacted microporous thermal insulation material is provided between the base 2 and the heating element 6.

### Example 2

A composition was prepared comprising:
96 percent by weight fumed silica, supplied by VAW of Germany;
2 percent by weight Advantex glass filaments, supplied by OCF of the USA; and
2 percent by weight pyrogenic silica type A200, supplied by Degussa-Huls of Belgium.

This composition, together with a heating element attached to its terminal block, was placed in a mould and compressed to form a heater unit. The compressed composition had a block density of 600 kilograms per cubic metre. The complete unit was heated at 800 degrees Celsius for 20 minutes.

The resulting heater was as shown in Figures 3 and 4, comprising a base 2 of the heat-hardened composition, together with a heating element 6 and terminal block 8. The heating element 6 and terminal block 8 were moulded into the base 2 and required no additional securing means.

The base 2 had a thermal conductivity of 0.0661 Watts per metre Kelvin and a flexural strength of 1135 kilonewtons per square metre.

### Example 3

A composition was prepared comprising:
93 percent by weight fumed silica, supplied by VAW of Germany;
2 percent by weight Advantex glass filaments, supplied by OCF of the USA; and
5 percent by weight pyrogenic silica type A200, supplied by Degussa-Huls of Belgium.

This composition, together with a heating element attached to its terminal block, was placed in a mould and compressed to form a heater unit. The compressed composition had a block density of 500 kilograms per cubic metre. The complete unit was heated at 800 degrees Celsius for 20 minutes.

The resulting heater was as shown in Figures 3 and 4, comprising a base 2 of the heat-hardened composition, together with a heating element 6 and terminal block 8.

The base 2 had a thermal conductivity of 0.0608 Watts per metre Kelvin and a flexural strength of 730 kilonewtons per square metre.

### Example 4

A composition was prepared comprising:
93 percent by weight fumed silica, supplied by VAW of Germany;
2 percent by weight Advantex glass filaments, supplied by OCF of the USA; and
5 percent by weight silica type R974, supplied by Degussa-Huls of Germany.

This composition, together with a heating element attached to its terminal block, was processed in exactly the same way as that of Example 3, to form a heater as shown in Figures 3 and 4, comprising a base 2 of the heat-hardened composition, together with a heating element 6 and terminal block 8.

The base 2 had a thermal conductivity of 0.0611 Watts per metre Kelvin and a flexural strength of 770 kilonewtons per square metre.

### Example 5

A composition was prepared comprising:
83 percent by weight fumed silica, supplied by VAW of Germany;
10 percent by weight rutile opacifier, supplied by Tilcon, UK;
2 percent by weight Advantex glass filaments, supplied by OCF of the USA; and
5 percent by weight pyrogenic silica type R200, supplied by Degussa-Huls of Germany.

This composition, together with a heating element attached to its terminal block, was placed in a mould and compressed to form a heater unit. The compressed composition had a block density of 600 kilograms per cubic metre. The complete unit was heated at 800 degrees Celsius for 20 minutes.

The resulting heater was as shown in Figures 3 and 4, comprising a base 2 of the heat-hardened composition, together with a heating element 6 and terminal block 8.

The base 2 had a thermal conductivity of 0.054 Watts per metre Kelvin and a flexural strength of 670 kilonewtons per square metre.

The foregoing examples demonstrate that a base for an electric heater having a composition based on fumed silica can be provided having adequate flexural strength and low thermal conductivity. Improved thermal conductivity and improved flow characteristics during compression are achieved by including a small amount of pyrogenic silica in the composition, while still retaining adequate flexural strength.

### Comparative Example 1

A composition was prepared comprising:
60 percent by weight pyrogenic silica type A200, supplied by Degussa-Huls of Germany;
37 percent by weight rutile opacifier, supplied by Tilcon, UK; and
3 percent by weight Advantex glass filaments, supplied by OCF.

The composition was compressed to form a base 2 for an electric heater, as shown in Figures 1 and 2. The block density was 350 kilograms per cubic metre.

The resulting base 2 exhibited very low thermal conductivity of 0.0301 Watts per metre Kelvin. However its flexural strength of 110 kilonewtons per square metre was insufficiently high for the base to be used for an electric heater.

### Comparative Example 2

A composition was prepared comprising:
80 percent by weight Microfine Vermiculite, supplied by Hoben Davis, UK; and
20 percent by weight type K66 binder, supplied by Crosfield, UK.

The composition was compressed to form a base 2 for an electric heater, as shown in Figures 1 and 2. The block density was 700 kilograms per cubic metre. The resulting base 2 was heat treated at 300 degrees Celsius for 20 minutes.

Although the base had excellent flexural strength of 1960 kilonewtons per square metre, its thermal conductivity was unacceptably high, having a value of 0.36 Watts per metre Kelvin.

### Comparative Example 3

A composition was prepared comprising:
62 percent by weight Microfine Vermiculite, supplied by Hoben Davis, UK;
20 percent by weight type K66 binder, supplied by Crosfield, UK; and
18 percent by weight pyrogenic silica, type A200, supplied by Degussa-Huls of Belgium.

The composition was compressed to form a base 2 for an electric heater, as shown in Figures 1 and 2. The block density was 700 kilograms per cubic metre. The resulting base was heat treated at 300 degrees Celsius for 20 minutes.

Although the base had excellent flexural strength of 1813 kilonewtons per square metre, its thermal conductivity was unacceptably high, having a value of 0.25 Watts per metre Kelvin.

## Claims

1. A base (2) for an electric heater **characterised in that** it comprises a compressed and heat-hardened composition, the composition comprises:
65 to 98 weight percent fumed silica;
1 to 15 weight percent reinforcing filaments;
up to 10 weight percent pyrogenic silica; and
up to 20 weight percent opacifier.

2. A base for an electric heater as claimed in claim 1, **characterised in that** the reinforcing filaments are selected from glass, silica, ceramic fibres, mineral fibres and body soluble fibres.

3. A base for an electric heater as claimed in claim 2, **characterised in that** the glass is selected from E glass, R glass, or S glass, and modifications thereof.

4. A base for an electric heater as claimed in any preceding claim, **characterised in that** the opacifier, when provided, is selected from titanium dioxide, silicon carbide and iron oxide.

5. A base for an electric heater as claimed in claim 4, **characterised in that** the titanium dioxide comprises rutile.

6. A base for an electric heater as claimed in claim 4, **characterised in that** the iron oxide comprises haematite.

7. A base for an electric heater as claimed in any preceding claim, provided of dish-like form, having an upstanding wall.

8. A base for an electric heater as claimed in any preceding claim, additionally provided with at least one electric heating element (6) secured thereto.

9. A base for an electric heater as claimed in claim 8, **characterised in that** a terminal block (8) is secured thereto and electrically connected to the at least one electric heating element (6).

10. A base for an electric heater as claimed in claim 8 or 9, **characterised in that** the at least one electric heating element (6) and/or the terminal block (8) has or have been secured thereto during formation of the base (2) by compression of the composition.

11. A base for an electric heater as claimed in claim 8, 9 or 10, **characterised in that** a layer (16) of microporous thermal insulation material of lower thermal conductivity than the base is provided between the base and the at least one electric heating element (6).

12. A method of manufacturing a base (2) for an electric heater comprising the steps of:
1) providing a composition comprising:
65 to 98 weight percent fumed silica;
1 to 15 weight percent reinforcing filaments;
up to 10 weight percent pyrogenic silica;
up to 20 weight percent opacifier;
2) compressing the composition to form the base; and
3) heating the base to effect hardening thereof.

13. A method according to claim 12, **characterised in that** the heating of the base to effect hardening thereof is carried out at a temperature of from 500 to 900 degrees Celsius.

14. A method according to claim 12 or 13, **characterised in that** the heating of the base to effect hardening thereof is carried out for a period of between 15 and 25 minutes.

15. A method according to claim 12, 13 or 14, **characterised in that** the reinforcing filaments are selected from glass, silica, ceramic fibres, mineral fibres and body soluble fibres.

16. A method according to claim 15, **characterised in that** the glass is selected from E glass, R glass, S glass, and modifications thereof.

17. A method according to any of claims 12 to 16, **characterised in that** the opacifier, when provided, is selected from titanium dioxide, silicon carbide and iron oxide.

18. A method according to claim 17, **characterised in that** the titanium dioxide comprises rutile.

19. A method according to claim 17, **characterised in that** the iron oxide comprises haematite.

20. A method according to any of claims 12 to 19, **characterised in that** the base is provided of dish-like form having an upstanding wall.

21. A method according to any of claims 12 to 20, **characterised in that** at least one electric heating element (6) is additionally provided and secured to the base.

22. A method according to claim 21, **characterised in that** a terminal block (8) is secured to the base and electrically connected to the at least one electric heating element (6).

23. A method according to claim 21 or 22, **characterised in that** the at least one electric heating element (6) and/or the terminal block (8) is or are secured to the base during formation thereof by compression of the composition.

24. A method according to claim 21, 22 or 23, **characterised in that** a layer (16) of microporous thermal insulation material of lower thermal conductivity than the base is provided between the base (2) and the at least one electric heating element (6).
